# EUROPEAN PATENT SPECIFICATION

(11) **EP 4 379 248 B1**
(45) Date of publication and mention of the grant of the patent: **28.01.2026**
(21) Application number: 23212059.2
(22) Date of filing: 24.11.2023
(51) Int. Cl.: F16L 25/01, F16L 23/12, F16L 23/06

(54) **COUPLING ASSEMBLY, COUPLING SYSTEM AND LINKS**
KUPPLUNGSANORDNUNG, KUPPLUNGSSYSTEM UND VERBINDUNGSSTÜCKE
ENSEMBLE D'ACCOUPLEMENT, SYSTÈME D'ACCOUPLEMENT ET LIAISONS

(30) Priority: 28.11.2022 US 202263428378 P
(43) Date of publication of application: 05.06.2024
(73) Proprietor: Eaton Intelligent Power Limited, Dublin 4, D04 Y0C2 (IE)
(72) Inventor: BREAY, Clifton Paul, Dublin, D04 Y0C2 (IE); ADKINS, Christopher Troy, Dublin, D04 Y0C2 (IE); HOYE, Preston Gregory, Dublin, D04 Y0C2 (IE)
(74) Representative: Schwan Schorer & Partner mbB

(56) References cited:
- US-A1- 2009 322 078
- US-A1- 2018 135 786
- US-B2- 6 880 859

## Description

### Technical Field

This disclosure relates to coupling assemblies for interconnecting confronting ends of a pair of fluid conveying members, and more particularly, clamshell variety coupling assembly, including methods of use.

### Background

Couplings are often difficult to assemble and prone to failure. In addition, many do not form a tight seal between the pipe interior and ambient environment, thereby allowing the media to escape to the outside environment, or allowing the outside environment to contaminate the media. In general, conventional couplings are difficult to install and assemble, thereby requiring expensive skilled artisans to construct the conduit system. US 2018/135786 A1 relates to a coupling assembly for sealingly coupling two pipes, comprising a coupling body defined by two arcuate coupling members each having a first end and a second end pivotally connected by a hinge arrangement and being pivotally moveable between an open position and a latched closed position. The hinge arrangement includes two parallel links being pivotally connected to the first arcuate coupling member and to the second arcuate coupling member. Each link has two pa rallel link walls and includes a bonding finger having a connecting end connected to the that one of the two link walls which is closer to the other link, while the free end extends away from the other link wall toward to the other link.

### Summary

The invention relates to a coupling assembly as defined in claim 1.

In example implementations, each of the first and second links includes parallel first and second link walls that extend between first and second link ends, the link walls define first pivot pin openings adjacent the first link ends and second pivot pin openings adjacent the second link ends, the first link end of the first link is connected to the first arcuate coupling member by a first pivot pin that extends along the first pivot axis and through the first pivot pin openings of the first link, the second link end of the first link is connected to the second arcuate coupling member by a second pivot pin that extends along the second pivot axis and through the second pivot pin openings of the first link, the first link end of the second link is connected to the first arcuate coupling member by a third pivot pin that extends along the first pivot axis and through the first pivot pin openings of the second link, the second link end of the second link is connected to the second arcuate coupling member by a fourth pivot pin that extends along the second pivot axis and through the second pivot pin openings of the second link and the first and second bonding fingers are defined by resilient cantilever members having has ends unitarily formed with one of the first and second link walls of each of the first and second links.

Each of the first and second links includes a bridge portion that couples the first and second link walls.

In example implementations, the coupling body includes first and second axial ends, radial flanges are provide at the first and second axial ends, and bonding wires routed circumferentially within the coupling body within grooves defined by radial flanges, the bonding wires include a first bonding wire including circumferential portions routed circumferentially along the first arcuate coupling member at the first and second axial ends of the coupling body and a second bonding wire including circumferential portions routed circumferentially along second arcuate coupling member at the first and second axial ends of the coupling body, the first bonding wire includes an axial portion routed axially along the first arcuate coupling member between circumferential portions of the first bonding wire, and the second bonding wire includes an axial portion routed axially along the second arcuate coupling member between circumferential portions of the second bonding wire.

In an example embodiment, the coupling assembly further includes a sleeve that fits within the coupling body, the first and second bonding fingers are adapted to contact the sleeve.

The invention also relates to a coupling system as defined in claim 5.

A variety of examples of desirable product features or methods are set forth in part in the description that follows, and in part will be apparent from the description, or may be learned by practicing various aspects of the disclosure. The aspects of the disclosure may relate to individual features as well as combinations of features. It is to be understood that both the foregoing general description and the following detailed description are explanatory only and are not restrictive of the claimed invention, which is defined by the appended claims.

### Brief Description of the Drawings

FIG. 1 is a schematic view of a coupling system including a coupling assembly and a sleeve, constructed in accordance with principles of this disclosure, depicting a pair of fluid conveying members being interconnected.
FIG. 2 is another schematic view of a coupling system including a coupling assembly and a sleeve, constructed in accordance with principles of this disclosure, depicting a pair of fluid conveying members being interconnected.
FIG. 3 is an exploded perspective view of one embodiment of a coupling assembly for interconnecting a pair of fluid conveying members, shown in a closed position of the first and second coupling members 102a,b.
FIG. 4 is an exploded perspective view of one embodiment of a coupling assembly for interconnecting a pair of fluid conveying members, shown in an open position of the first and second coupling members 102a,b.
FIG. 5 is a schematic view of a coupling assembly and a sleeve, constructed in accordance with principles of this disclosure, shown in a closed position of the first and second coupling members 102a,b.
FIG. 6 is a front perspective view of the coupling assembly of FIG. 5.
FIG. 7 is a top perspective view of the coupling assembly of FIG. 5.
FIG. 8 is a bottom perspective view of the coupling assembly of FIG. 5.
FIG. 9 is a side perspective view of the coupling assembly of FIG. 5.
FIG. 10 is another side perspective view of the coupling assembly of FIG. 5, while a second coupling member 102b is removed to show the details.
FIG. 11 is an enlarge view of portion E shown in FIG. 10, while a second coupling member 102b is removed to show the details.
FIG. 12 is another schematic view of the coupling assembly of FIG. 5.
FIG. 13 is another schematic view of the coupling assembly of FIG. 5, in which part of the latching arrangement 104 is removed to show the details.
FIG. 14 is a schematic view of the coupling assembly, constructed in accordance with principles of this disclosure, shown in an open position of the first and second coupling members 102a,b.
FIG. 15 is a front perspective view of the coupling assembly of FIG. 14.
FIG. 16 is a top perspective view of the coupling assembly of FIG. 14.
FIG. 17 is a side perspective view of the coupling assembly of FIG. 14.
FIG. 18 is a schematic view of first and second links 200a,b including first and second bonding fingers 202a,b, constructed in accordance with principles of this disclosure.
FIG. 19 is a front perspective view of the first and second links 200a,b of FIG. 18.
FIG. 20 is a rear perspective view of the first and second links 200a,b of FIG. 18.
FIG. 21 is a top perspective view of the first and second links 200a,b of FIG. 18.
FIG. 22 is a bottom perspective view of the first and second links 200a,b of FIG. 18.
FIG. 23 is a side perspective view of the first and second links 200a,b of FIG. 18.

### Detailed Description

Reference will now be made in detail to exemplary aspects of the present disclosure that are illustrated in the accompanying drawings. Wherever possible, the same reference numbers will be used throughout the drawings to refer to the same or like parts.

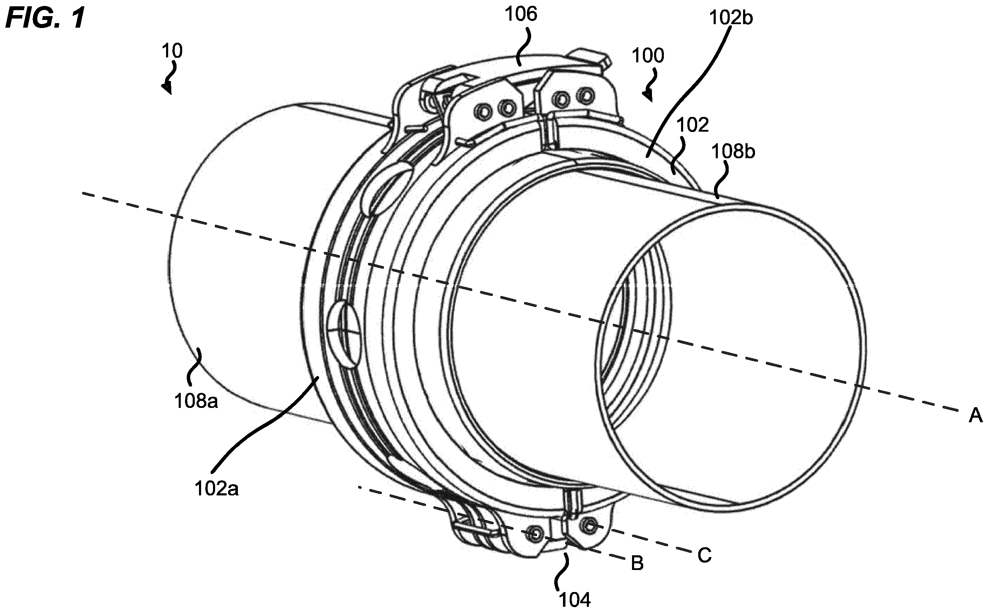

FIGS. 1-4 show a coupling system 10 including a coupling assembly 100 and a sleeve 112 that are both attached to a pair of fluid conveying members 108a,b. In one nonlimiting example, coupling system 10 can be part of a fluid conveying application, such as a low pressure aircraft fuel system. In this example, the coupling assembly 100 may be a threadless, clamshell variety.

The coupling assembly 100 is configured to connect together a fluid joint that includes confronting ends of a pair of confronting fluid conveying members 108a,b, each end having a ferrule 110a,b attached to an end thereof, and a sleeve 112 that is installed over and surrounds the ferrules 110a,b. Each ferrule 110a,b includes an annular channel or groove 114a,b configured to receive an annular sealing member 116a,b, such as an O-ring. The sleeve 112 is generally cylindrical in shape and includes an inner cylindrical surface 118 and an outer cylindrical surface 120. To couple the fluid joint having confronting ends of a pair of fluid conveying members, the coupling operation begins with installing the annular sealing members 116a,b into respective grooves 114a,b in the ferrules 110a,b of the fluid conveying members 108a,b. Next, the ferrules 110a,b of the fluid conveying members 108a,b are moved into a confronting position with each other, such that they are positioned in close proximity or contact with each other. The sleeve 112 is then installed over the ferrules 110a,b of the fluid conveying members 108a,b, such that the sleeve 112 surrounds the ferrules 110a,b. The ferrules 110a,b of the fluid conveying members 108a,b, which are surrounded by the sleeve 112, are then placed within one of the coupling members (e.g., first coupling member 102a), and the first and second coupling members 102a,b are rotated relative to each other towards the closed position of the coupling assembly 100.

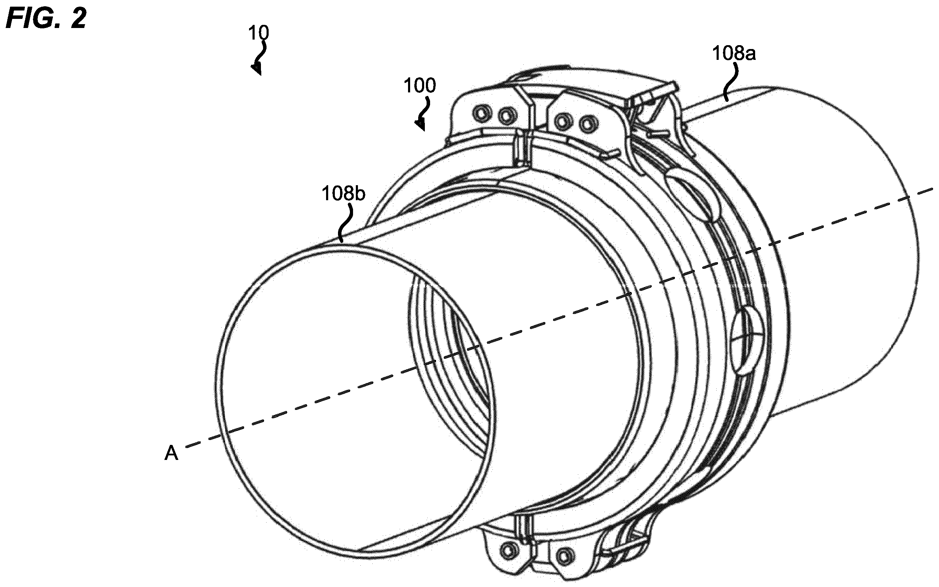

The tubular first fluid conveying member 108a and the tubular second fluid conveying member 108b represent existing pipe sections to be joined. The first fluid conveying member 108a and second fluid conveying member 108b each have the outside diameter and the inside diameter. The first fluid conveying member 108a and second fluid conveying member 108b also have the pipe interior surface 130 and the pipe exterior surface 128. Typically, the first fluid conveying member 108a and second fluid conveying member 108b have the same outside diameter and the same inside diameter. It will be apparent to those of ordinary skill in the art that the typical application of the coupling assembly 100 will be for joining sections of the same inside and outside diameter, but the coupling assembly 100 may be altered to accommodate different pipe sizes. As shown in FIGS. 1 and 2, the first fluid conveying member 108a and second fluid conveying member 108b share the longitudinal axis A.

The axial gap between the first fluid conveying member 108a and second fluid conveying member 108b is designated. It will be understood that the axial gap may vary, depending, for example, on the outside diameter or the inside diameter. The first fluid conveying member 108a and second fluid conveying member 108b typically comprise the same material.

The coupling assembly 100 may surround the two ends of the pair of fluid conveying members 108a,b and the axial gap between the two ends of the pair of fluid conveying members 108a,b. The coupling assembly 100 may have a generally circular or otherwise rounded shape configured to surround and conform to a contour or contours of the outer surfaces of the fluid conveying members 108a,b, and/or to other features in between the coupling assembly 100 and the fluid conveying members 108a,b. Although described primarily herein as having a generally circular or otherwise rounded shape, the coupling assembly 100 may have other shapes to conform to non-circular or non-rounded shapes or segments of the fluid conveying members 108a,b. Portions of the outer surfaces of the fluid conveying members 108a,b are shown in dashed line underneath the coupling assembly 100 for clarity. As is discussed in further detail below, other features or structures may be located in between the coupling assembly 100 and the outer surfaces of the fluid conveying members 108a,b. For example, there may be a sleeve 112, a gasket or other types of seals in between the coupling assembly 100 and the fluid conveying members 108a,b.

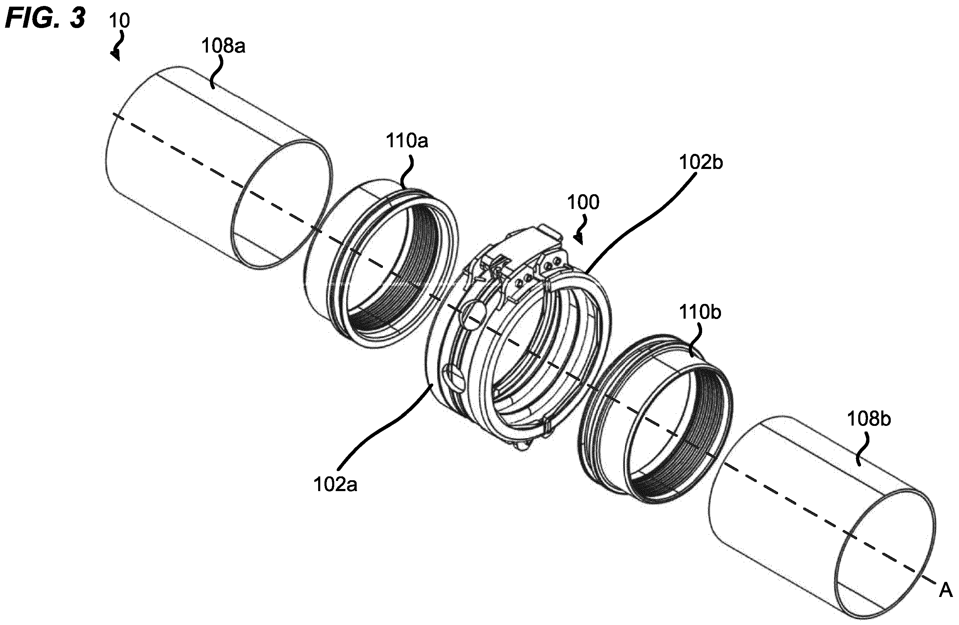

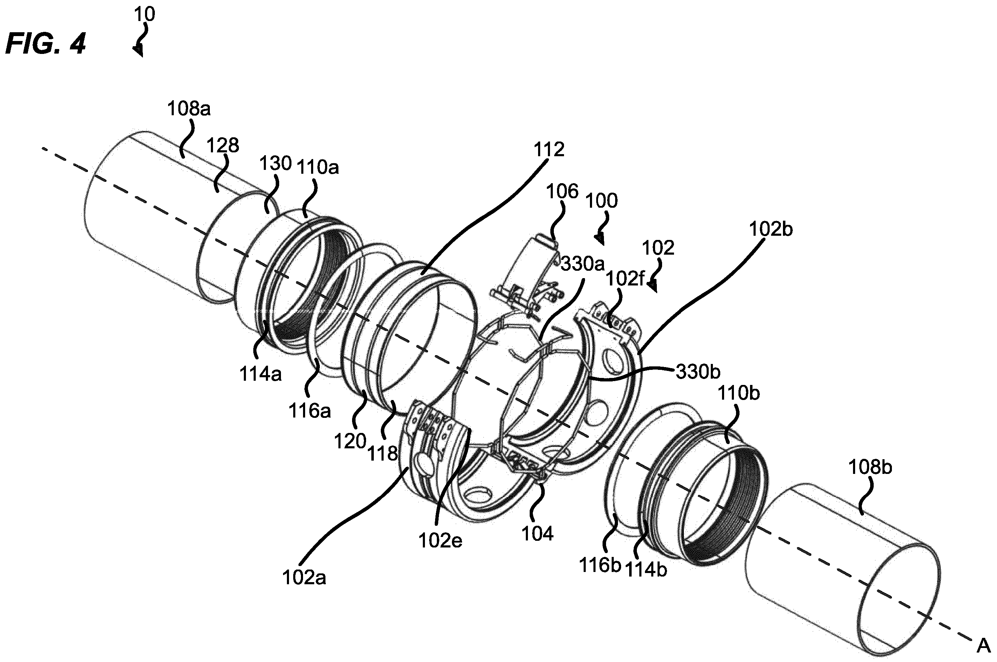

Still in reference to FIG. 1, the coupling assembly 100 is hinged together at one respective end via the hinge arrangement 104 and releasably secured together at the other respective end via the latching arrangement 106. The hinge arrangement 104 enables the first and second coupling members 102a,b to move relative to each other between a closed position of the first and second coupling members 102a,b (FIG. 3), where the latching arrangement 106 is engaged and the first and second coupling members 102a,b are secured together as a single continuous annular unit, and an open position, where the latching arrangement 106 is disengaged and the first and second coupling members 102a,b are free to move relative to each other via the hinge arrangement 104. In FIG.4, based on the open position of the first and second coupling members 102a,b, the latching arrangement 106 is further demounted from the first and second coupling members 102a,b to show the details. It is understandable that in open position of the first and second coupling members 102a,b, at least part of the latching arrangement 106 can be secured on at least one of the first and second coupling members 102a,b. In its closed position (FIG. 3), the coupling body 102 defines a central longitudinal axis A. The first coupling member 102a defines a rotation axis B and the second coupling member 102b defines a rotation axis C, in some embodiments, at least one of the rotation axis B and rotation axis C is parallel to the central longitudinal axis A.

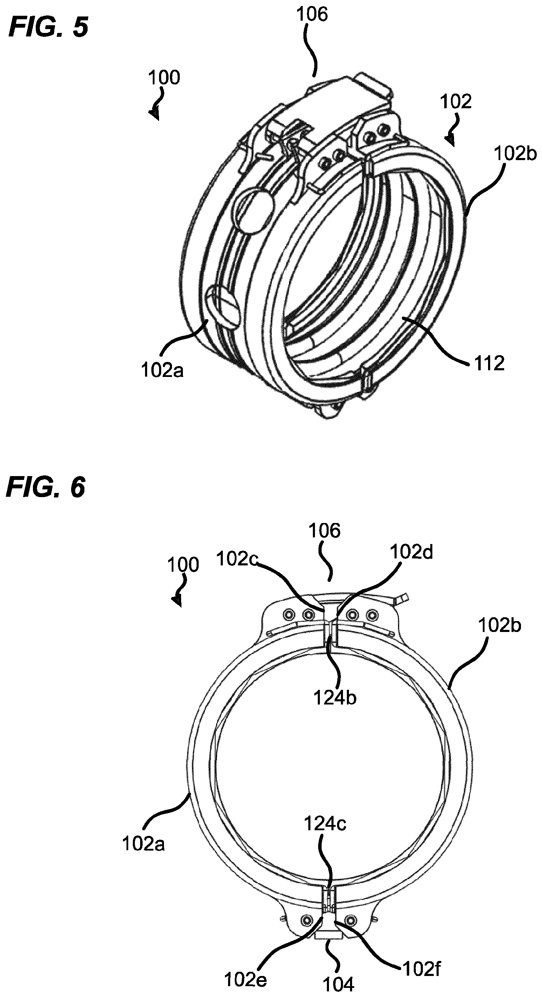

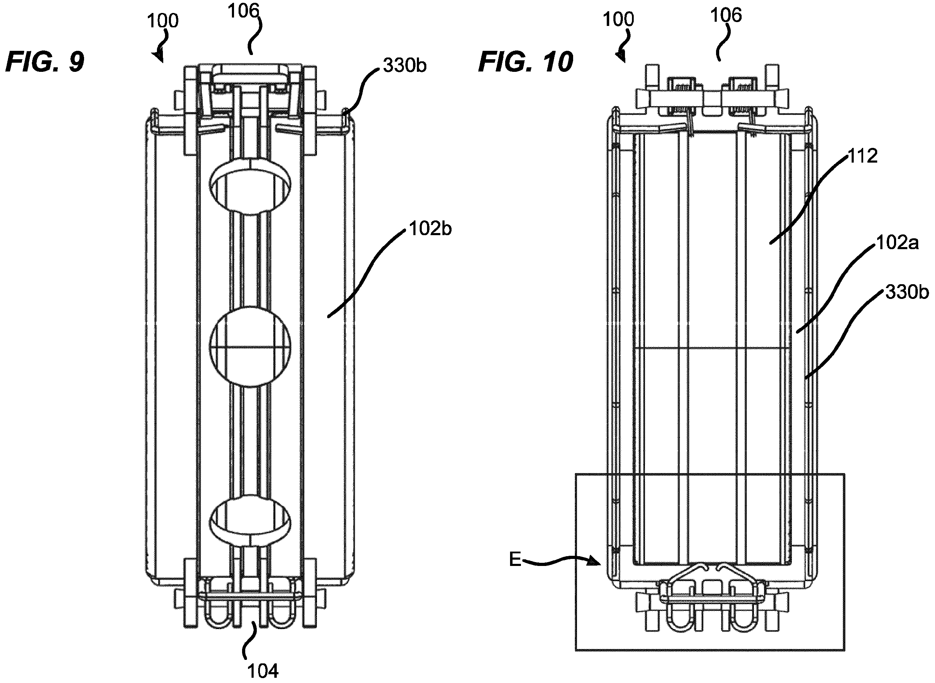

FIGS. 5 through 11 depict various views of various embodiments of a coupling assembly 100 having first and second links 200a,b. In reference now to FIGS. 5-11, the coupling assembly 100 includes a coupling body 102 which is defined by first and second coupling members 102a,b, each first and second coupling members 102a,b having a first end 102c,d and a second end 102e,f. The coupling assembly 100 includes a hinge arrangement 104 for pivotally connecting the second end 102e,f of the first and second coupling members 102a,b together such that the first and second coupling members 102a,b are pivotally moveable between a closed position (FIG. 3) and an open position (FIG. 4), the first and second coupling members 102a,b surrounding a central axis A of the coupling body 102 when in the closed position, the first and second coupling members 102a,b defining a second circumferential gap 124c between the second end 102e,f.

According to the invention, the coupling assembly 100 is hinged together at one respective end via the hinge arrangement 104 and releasably secured together at the other respective end via the latching arrangement 106. The hinge arrangement 104 enables the first and second coupling members 102a,b to move relative to each other between a closed position (FIG. 3), where the latching arrangement 106 is engaged and the first and second coupling members 102a,b are secured together as a single continuous annular unit, and an open position (FIG. 4), where the latching arrangement 106 is disengaged and the first and second coupling members 102a,b are free to move relative to each other via the hinge arrangement 104. In its closed position (FIG. 3), the coupling body 102 defines a central longitudinal axis A.

The first coupling member 102a includes a first pair of parallel walls 1024a,c extending circumferentially on the outside surface of the first coupling member 102a, and the second coupling member 102b includes a second pair of parallel walls 1024b,d extending circumferentially on the outside surface of the second coupling member 102b. The hinge arrangement 104 includes first and second links 200a,b that are parallel and that are spaced-apart from one another in an orientation along the central axis A, the first and second links 200a,b being configured to extend circumferentially across the second circumferential gap 124c, the first and second links 200a,b being pivotally connected to the first pair of parallel walls 1024a,c at a first pivot axis B and being pivotally connected to the second pair of parallel walls 1024b,d at a second pivot axis C; and the latching arrangement 106 for latching the first end 102c,d of the first and second coupling members 102a,b together to latch the first and second coupling members 102a,b in the closed position having a first circumferential gap 124b. According to the invention, the first link 200a includes a first bonding finger 202a configured to project axially through the second circumferential gap 124c and the second link 200b includes a second bonding finger 202b configured to project axially through the second circumferential gap 124c. Thus, the coupling assembly combines the function of a hinging mechanism and an electrically bonding mechanism of the coupling assembly and the sleeve, therefore reduces part count of links 200a,b to a bare minimum of two. It improves the reliability and efficiency of the coupling assembly and reduces the manufacturing cost. In addition, the binding will remain operational both when the coupling assembly is in the open and closed position, ensuring that electrical and/or signal transmission between the fluid conveying members 108a,b is maintained at all times. Furthermore, the coupling assembly achieves electrical bonding via a second circumferential gap 124c between the first and second coupling members 102a,b, without interference with the first and second coupling members 102a,b. The first and second links 200a,b maintain the redundancy requirement of 14 CFR 25.981, which means that even if any of them fails, the remaining one will continue to work and fulfill its function.

The latching arrangement 106 may lock or otherwise secure the first and second coupling members 102a,b together. The first and second links 200a,b may be used to bring together the first and second coupling members 102a,b of the coupling assembly 100 and tighten the coupling assembly 100 onto the two fluid conveying members 108a,b. As shown, the first and second links 200a,b may be coupled with the second end 102e,f. The first and second links 200a,b may therefore connect the second end 102e,f. As is further discussed in detail below, the first and second links 200a,b may be adjustable so that the coupling assembly 100 can accommodate various sizes and/or shapes of fluid conveying members 108a,b. The first and second links 200a,b may have a substantially shorter length as compared to that of the coupling body 102. In some embodiments, the length of the first and second links 200a,b may be longer. Further, the first and second links 200a,b may have a width similar to that of the coupling body 102. In some embodiments, the first and second links 200a,b may be narrower or wider than that of the coupling body 102.

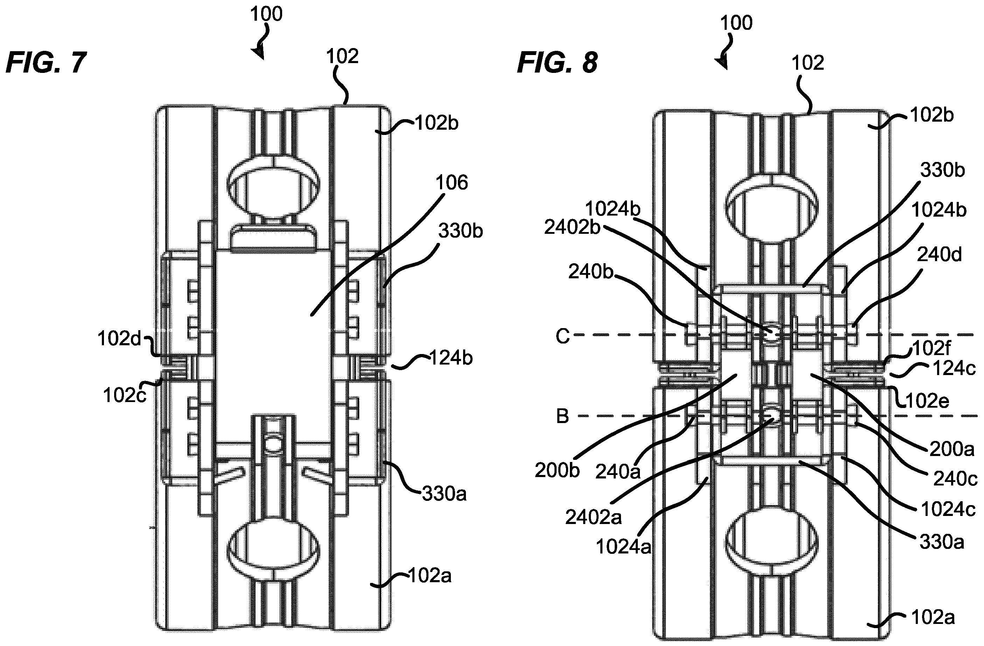

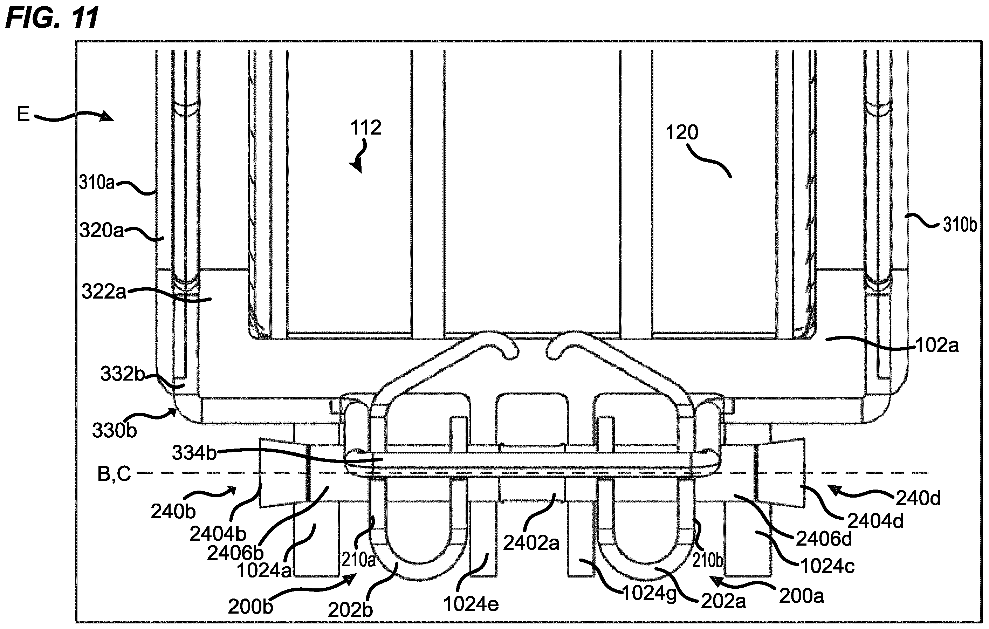

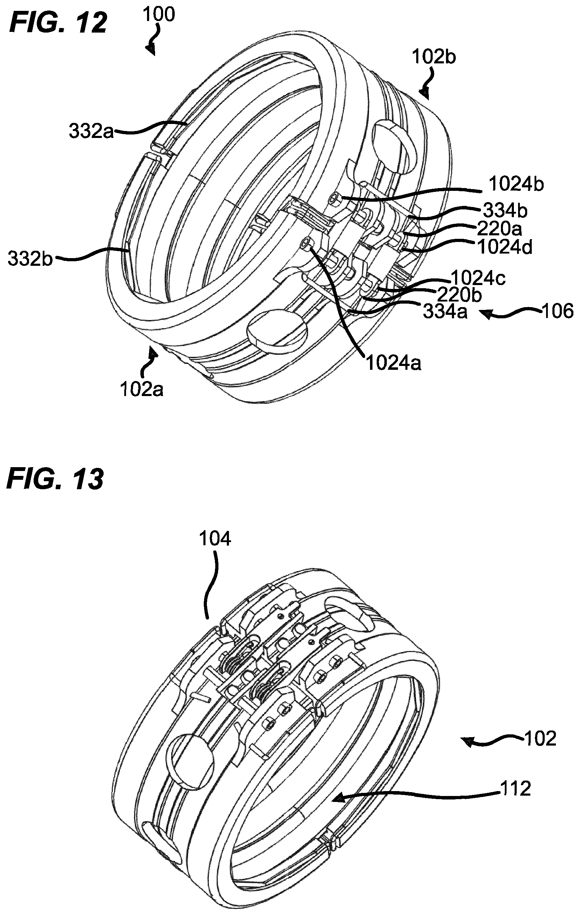

In reference at least to FIGS. 8, 11, 12 and 18, an example embodiment of a latching arrangement 106 is shown schematically. In some embodiments, at least in FIGS. 11-12 and 18, each of the first and second links 200a,b includes parallel first and second link walls 210a,b that extend between first and second link ends 220a,b, the first and second link walls 210a,b define first pivot pin openings 230a adjacent the first link ends 220a and second pivot pin openings 230b adjacent the second link ends 220b. In some embodiments, at least in FIG. 8, the first link ends 220a of the first link 200a is connected to the first coupling member 102a by a first pivot pin 240a that extends along the first pivot axis B and through the first pivot pin openings 230a of the first link 200a and the first openings 1024a of the first coupling member 102a. In some embodiments, the second link ends 220b of the first link 200a is connected to the second coupling member 102b by a second pivot pin 240b that extends along the second pivot axis C and through the second pivot pin openings 230b of the first link 200a and the second openings 1024b of the second coupling member 102b. In some embodiments, the first link ends 220a of the second link 200b is connected to the first coupling member 102a by a third pivot pin 240c that extends along the first pivot axis B and through the first pivot pin openings 230a of the second link 200b and the third openings 1024c of the first coupling member 102a. In some embodiments, the second link ends 220b of the second link 200b is connected to the second coupling member 102b by a fourth pivot pin 240d that extends along the second pivot axis C and through the second pivot pin openings 230b of the second link 200b and the fourth openings 1024d of the second coupling member 102b. In some embodiments, the first and third openings 1024a,c defines the rotation axis B of the first coupling member 102a, and the second and fourth openings 1024b,d defines the rotation axis C of the first coupling member 102b. In some embodiments, for example in FIG. 11, each pin has the same length and/or diameter. In some embodiments, for example in FIG. 11, the diameters of pin ends 2404a,b,c,d of the pivot pins 240a,b,c,d increase as the pivot pin 240a,b,c,d extends axially. With such arrangement, the pivot pin is secured in its working position after passing through the opening of the coupling members, therefore holding the link in its working position. In some embodiments, for example in FIG. 11, the pin ends 2404a,b,c,d of the pivot pin 240a,b,c,d is detachable from a body 2406a,b,c,d of the pivot pin, thus to facilitate the installation or removal of the link without dismantling the coupling assembly. In some embodiments, for example in FIGS. 8 and 11, the first and third pivot pin 240a,c can be connected via a first node 2402a, while the second and fourth pivot pin 240b,d can be connected via a second node 2402b. Such nodular connection makes it easier to connect the pins to each other, and provides buffering between the pins. In some embodiments, for example in FIGS. 8 and 11, the first coupling member 102a includes a third pair of parallel walls 1024e,g extend circumferentially on the outside surface of the first coupling member 102a, and the second coupling member 102b includes a fourth pair of parallel walls extend circumferentially on the outside surface of the second coupling member 102b. Thus, the working position of the pivot pins is further secured, and the pins and the link attached will not be displaced even if they are subjected to external forces during operation.

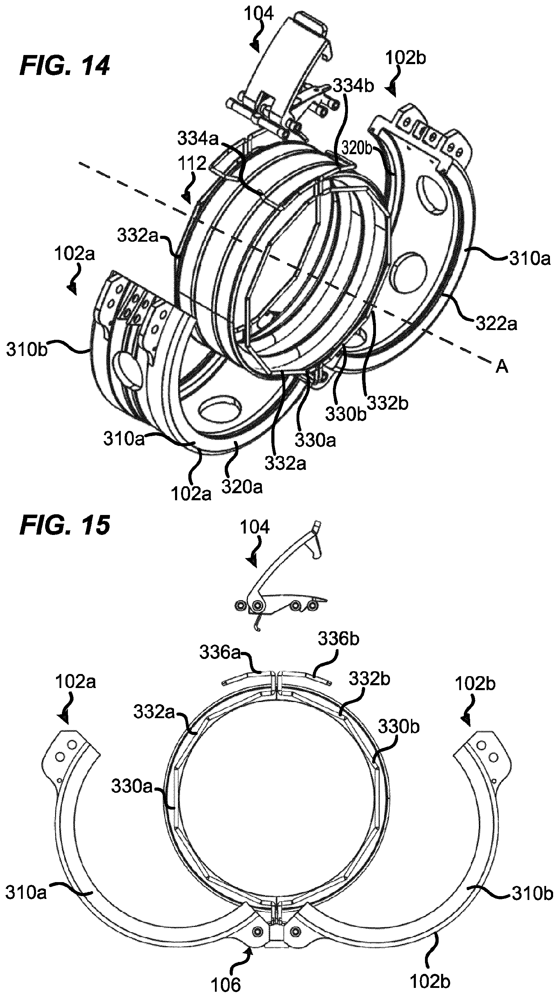

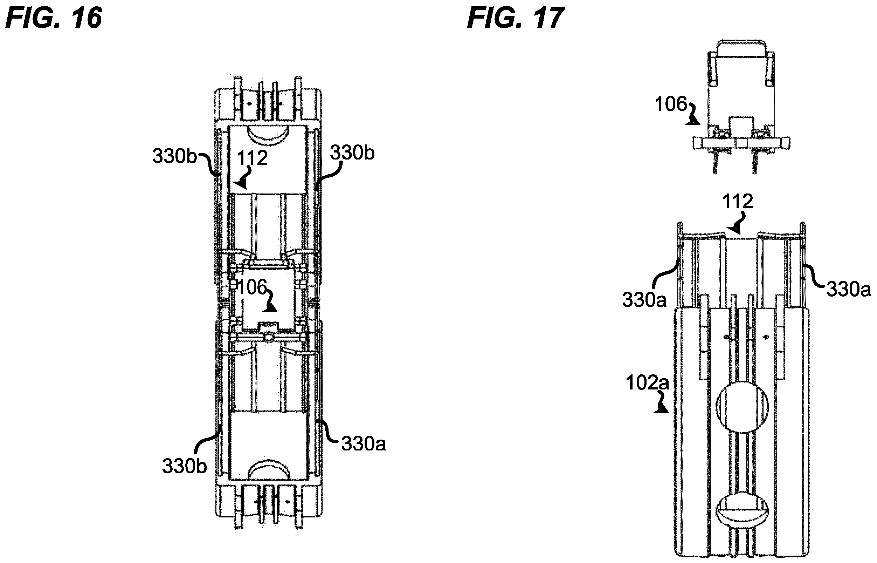

In reference to FIGS. 14-17, an example embodiment of first and second bonding wires 330a,b is shown schematically. In some embodiments, the coupling body 102 includes first and second axial ends 310a,b, radial flanges 320a,b are provide at the first and second axial ends 310a,b, and first and second bonding wires 330a,b routed circumferentially within the coupling body 102 within notches 322a,b defined by radial flanges 320a,b, the first and second bonding wires 330a,b include a first bonding wire 330a including first circumferential portions 332a routed circumferentially along the first coupling member 102a at the first and second axial ends 310a,b of the coupling body 102, and a second bonding wire 330b including second circumferential portions 332b routed circumferentially along second coupling member 102b at the first and second axial ends 310a,b of the coupling body 102, the first bonding wire 330a includes a first axial portion 334a routed axially along the first coupling member 102a between first circumferential portions 332a of the first bonding wire 330a, and the second bonding wire 330b includes a second axial portion 334b routed axially along the second coupling member 102b between second circumferential portions 332b of the second bonding wire 330b. As a result, the radial flanges 320a,b may secure the connection and sealing between the coupling assembly 100 and the pair of fluid conveying members 108a,b, and the first and second bonding wires 330a,b provide the electrical connection between the pair of fluid conveying members 108a,b. In some embodiments, at least one of the first and second circumferential portions 332a,b may also include several segments of lines based on designs, such as installation requirements. In some embodiments, the first and second bonding wires 330a,b may also include radially portions and outer circumferential portions, as shown at least in FIGS. 14-17.

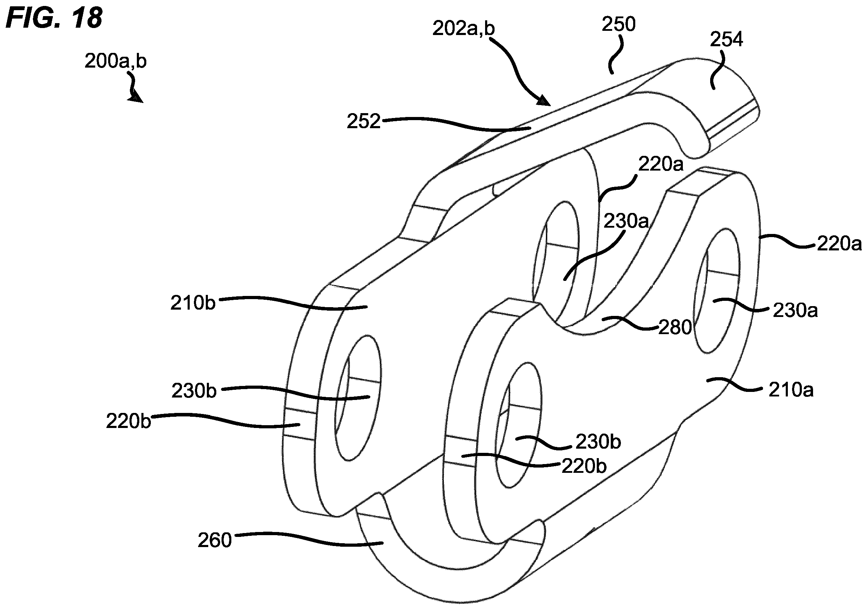

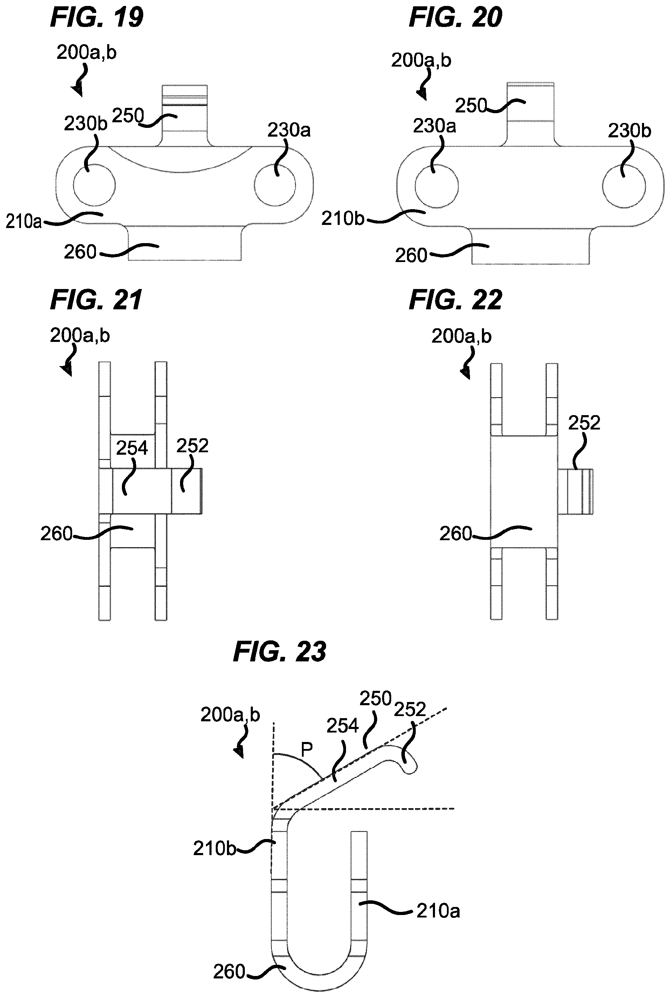

In reference now to FIGS. 18-23, an example embodiment of links 200a,b is shown schematically. In some embodiments, each of the links 200a,b includes a link body and a bonding finger. According to the invention, the first and second bonding fingers 202a,b are each defined by a resilient cantilever member 250 having an end fixed to one of the first and second link walls 210a,b of each of the first and second links 200a,b. The resilient cantilever member 250 may include a cantilever body 252 and a hook 254. For example in FIG. 18, one end of the cantilever body 252 can be unitarily formed with the second link walls 210b. The hook 254 is fixed to an opposite end of the cantilever body 252 and located at a free end of the resilient cantilever member 250. The hook 254 can further enlarge the contact space between the first and second links 200a,b and the sleeve 112, and may also avoid, by its rounded shape, the physical damage to the sleeve 112 that could be caused by the contact. Therefore, the resilient cantilever members 250 may allow operation of the first and second bonding fingers 202a,b in different senses of motion. One sense of motion is the deflection of the resilient cantilever members 250 under impact loads applied at the free end of the first and second links 200a,b, thus securing the mechanical connection and the electrical bonding between the first and second links 200a,b and the sleeve 112.

In some embodiments, the angle P can be varied based on the distance between the first and second links 200a,b and the sleeve 112, such as ranging from 20°-60°. That is, the angle between the resilient cantilever members 250 and the second link wall 210b varies, for example, from 120°-160°. For example, the angle P might decrease when the distance between the first and second links 200a,b and the sleeve 112 increase, or the angle P might increase when the distance between the first and second links 200a,b and the sleeve 112 decrease. Thus, the mechanical connection and the electrical bonding between the first and second links 200a,b and the sleeve 112 is ensured. Such arrangement can be achieved by the flexible connection between the resilient cantilever member 250 and second link walls 210b. In some embodiments, the length of the resilient cantilever members 250 can be varied based on the distance between the between the first and second links 200a,b and the sleeve 112 to secure the mechanical connection and the electrical bonding.

Still in reference to FIGS. 18-23, in some embodiments, each of the first and second links 200a,b includes a bridge portion 260 that couples the first and second link walls 210a,b. Here, the bridge portion 260 may allow operation of the first and second links 200a,b in different senses of motion. One sense of motion is the deflection of the bridge portion 260 under impact loads applied at the first and second link walls 210a,b. Another sense of motion is the twisting of the first and second link walls 210a,b. Thus, the bridge portion 260 provide each of the first and second links 200a,b with the ability to withstand high impact loads and torsional loads, thus securing the mechanical connection and the electrical bonding between the first and second links 200a,b and the sleeve 112. In some embodiments, the first link wall 210a includes a concave 280 located opposite to the bridge portion 260 to avoid potential contact between the link body and the bonding finger, especially when the link body and/or the bonding finger deflect.

## Claims

1. A coupling assembly comprising:
a coupling body (102) defined by first and second arcuate coupling members (102a, 102b) each having a first end (102c, 102d) and a second end 102e, 102f);
a hinge arrangement (104) for pivotally connecting the second ends of the first and second arcuate coupling members together such that the first and second arcuate coupling members are pivotally moveable between an open position and a closed position, the first and second arcuate coupling members surrounding a central axis (A) of the coupling body when in the closed position, the first and second arcuate coupling members defining a circumferential gap (124c) between the second ends, the hinge arrangement including first and second links (200a, 200b) that are parallel and that are spaced-apart from one another in an orientation along the central axis, the first and second links (200a, 200b) being configured to extend circumferentially across the circumferential gap, the first and second links being pivotally connected to the first arcuate coupling member at a first pivot axis (B) and being pivotally connected to the second arcuate coupling member at a second pivot axis (C), the first link including a first bonding finger (202a) configured to project through the circumferential gap and the second link including a second bonding finger (202b) configured to project through the circumferential gap; and
a latching arrangement (106) for latching the first ends of the first and second arcuate coupling members together to latch the first and second arcuate coupling members in the closed position,
wherein each of the first and second links includes parallel first and second link walls (210a, 210b) that extend between first and second link ends (220a, 220b) and are coupled via a bridge portion (260);
**characterised in that** the bonding finger of each of the first and second links is defined by a resilient cantilever member (250) having a connecting end connected to that one of the first and second link walls which is farther away from the other link and a hook-shaped free end (254) which extends across the other one of the first and second link walls towards the other link, said other one of the first and second link walls including a concavity (280) located opposite to the bridge portion to avoid potential contact between said link wall and the bonding finger; and wherein the angle between the resilient can ilever member and the link wall to which it is connected to is within the range from 120° to 160°.

2. The coupling assembly of claim 1, wherein the link walls (210a, 210b) define first pivot pin openings (230a) adjacent the first link ends (220a) and second pivot pin openings (230b) adjacent the second link ends (220b), wherein the first link end of the first link (200a) is connected to the first arcuate coupling member (102a) by a first pivot pin (240a) that extends along the first pivot axis (B) and through the first pivot pin openings of the first link, wherein the second link end of the first link is connected to the second arcuate coupling member (102b) by a second pivot pin (240b) that extends along the second pivot axis (C) and through the second pivot pin openings of the first link, wherein the first link end of the second link is connected to the first arcuate coupling member by a third pivot pin (240c) that extends along the first pivot axis and through the first pivot pin openings of the second link, wherein the second link end of the second link is connected to the second arcuate coupling member by a fourth pivot pin (240d) that extends along the second pivot axis and through the second pivot pin openings of the second link and wherein the connecting end of the resilient cantilever members (250) is unitarily formed with the respective link wall (210b, 210a).

3. The coupling assembly of any of claims 1-2, wherein the coupling body (102) includes first and second axial ends (310a, 310b), wherein radial flanges (320a, 320b) are provided at the first and second axial ends, and wherein bonding wires (330a, 330b) are routed circumferentially within the coupling body within grooves defined by the radial flanges, wherein the bonding wires include a first bonding wire (330a) including first circumferential portions (332a) routed circumferentially along the first arcuate coupling member (102a) at the first and second axial ends of the coupling body and a second bonding wire (330b) including second circumferential portions (332b) routed circumferentially along the second arcuate coupling member (102b) at the first and second axial ends of the coupling body, wherein the first bonding wire includes a first axial portion (334a) routed axially along the first arcuate coupling member between the first circumferential portions of the first bonding wire, and wherein the second bonding wire includes a second axial portion (334b) routed axially along the second arcuate coupling member between the second circumferential portions of the second bonding wire.

4. The coupling assembly of any of claims 1-3, wherein at least one of the first and second links (200a, 200b) is configured for a mechanical connection and an electrical bonding; and wherein at least one of the first and second bonding fingers (202a, 202b) is configured for the electrical bonding.

5. A coupling system comprising the coupling assembly of any of claims 1-4, and
a sleeve (112) that fits within the coupling body (102), wherein the first and second bonding fingers (202a, 202b) are adapted to cor tact the sleeve.

6. The coupling system of claim 5, wherein the link walls (210a, 210b) define first pivot pin openings (230a) adjacent the first link ends (220a) and second pivot pin openings (230b) adjacent the second link ends (220b), wherein the first link end of the first link (200a) is connected to the first arcuate coupling member (102a) by a first pivot pin (240a) that extends along the first pivot axis (B) and through the first pivot pin openings of the first link, wherein the second link end of the first link is connected to the second arcuate coupling member (102b) by a second pivot pin (240b) that extends along the second pivot axis (C) and through the second pivot pin openings of the first link, wherein the first link end of the second link is connected to the first arcuate coupling member by a third pivot pin (240c) that extends along the first pivot axis and through the first pivot pin openings of the second link, wherein the second link end of the second link is connected to the second arcuate coupling member by a fourth pivot pin (240d) that extends along the second pivot axis and through the second pivot pin openings of the second link and wherein the connecting end of the resilient cantilever members (250) is unitarily formed with the respective link wall (210a, 210b).

7. The coupling system of any of claims 5-6, wherein the coupling body (102) includes first and second axial ends (310a, 310b), where n radial flanges (320a, 320b) are provided at the first and second axial ends, and wherein bonding wires (330a, 330b) are routed circumferentially within the coupling body within grooves defined by the radial flanges, wherein the bonding wires include a first bonding wire (330a) including first circumferential portions (332a) routed circumferentially along the first arcuate coupling member (102a) at the first and second axial ends of the coupling body and a second bonding wire (330b) including second circumferential portions (332b) routed circumferentially along the second arcuate coupling member (102b) at the first and second axial ends of the coupling body, wherein the first bonding wire includes a first axial portion (334a) routed axially along the first arcuate coupling member between the first circumferential portions of the first bonding wire, and wherein the second bonding wire includes a second axial portion (334b) routed axially along the second arcuate coupling member between the second circumferential portions of the second bonding wire.

8. The coupling system of any of claims 5 - 7, wherein at least one of the first and second links (102a, 102b) is configured for a mechanical connection and an electrical bonding; and wherein at least one of the first and second bonding fingers (202a, 202b) is configured for the electrical bonding.

9. The coupling system of any of claims 5 - 8, wherein at least one of the first and second links (102a, 102b) is incorporated as part of a hinge of a clam-shell style clamp, and wherein the clam-shell style clamp is part of the coupling system having ends with ferrules 112a, 112b) that fit within the clamp.

## Patentansprüche

1. Kupplungsanordnung, umfassend:
einen Kupplungskörper (102), der durch ein erstes und ein zweites bogenförmiges Kupplungselement (102a, 102b) definiert ist, die jeweils ein erstes Ende (102c, 102d) und ein zweites Ende (102e, 102f) aufweisen;
eine Scharniereinrichtung (104) zum schwenkbaren Verbinden der zweiten Enden des ersten und zweiten bogenförmigen Kupplungselements miteinander, sodass das erste und zweite bogenförmige Kupplungselement zwischen einer offenen Position und einer geschlossenen Position schwenkbar beweglich sind, wobei das erste und zweite bogenförmige Kupplungselement in der geschlossenen Position eine Mittelachse (A) des Kupplungskörpers umgeben, wobei das erste und das zweite bogenförmige Kupplungselement einen Umfangsspalt (124c) zwischen den zweiten Enden definieren, wobei die Scharniereinrichtung ein erstes und ein zweites Verbindungsstück (200a, 200b) einschließt, die parallel zueinander und in einer Ausrichtung entlang der Mittelachse voneinander beabstandet sind, wobei das erste und das zweite Verbindungsstück (200a, 200b) so konfiguriert sind, dass sie sich in Umfangsrichtung über den Umfangsspalt erstrecken, wobei das erste und das zweite Verbindungsstück an einer ersten Schwenkachse (B) schwenkbar mit dem ersten bogenförmigen Kupplungselement verbunden sind und an einer zweiten Schwenkachse (C) schwenkbar mit dem zweiten bogenförmigen Kupplungselement verbunden sind, wobei das erste Verbindungsstück einen ersten Verbindungsfinger (202a) einschließt, der so konfiguriert ist, dass er durch den Umfangsspalt herausragt, und das zweite Verbindungsstück einen zweiten Verbindungsfinger (202b) einschließt, der so konfiguriert ist, dass er durch den Umfangsspalt herausragt; und
eine Verriegelungseinrichtung (106) zum Verriegeln der ersten Enden des ersten und zweiten bogenförmigen Kupplungselements miteinander, um das erste und zweite bogenförmige Kupplungselement in der geschlossenen Position zu verriegeln,
wobei jedes des ersten und zweiten Verbindungsstücks parallele erste und zweite Verbindungsstückwände (210a, 210b) einschließt, die sich zwischen ersten und zweiten Verbindungsstückenden (220a, 220b) erstrecken und über einen Brückenabschnitt (260) miteinander verbunden sind;
**dadurch gekennzeichnet, dass**
der Verbindungsfinger jedes des ersten und zweiten Verbindungsstücks durch ein elastisches Auslegerelement (250) definiert ist, das ein Verbindungsende aufweist, das mit derjenigen der ersten und zweiten Verbindungsstückwände verbunden ist, die weiter von dem anderen Verbindungsstück entfernt ist, und ein hakenförmiges freies Ende (254) aufweist, das sich über die andere der ersten und zweiten Verbindungsstückwände in Richtung des anderen Verbindungsstücks erstreckt, wobei die andere der ersten und zweiten Verbindungsstückwände eine Konkavität (280) einschließt, die sich gegenüber dem Brückenabschnitt befindet, um einen möglichen Kontakt zwischen der Verbindungsstückwand und dem Verbindungsfinger zu vermeiden; und wobei der Winkel zwischen dem elastischen Auslegerelement und der Verbindungsstückwand, mit der es verbunden ist, im Bereich von 120° bis 160° liegt.

2. Kupplungsanordnung nach Anspruch 1, wobei die Verbindungsstückwände (210a, 210b) erste Schwenkzapfenöffnungen (230a) benachbart zu den ersten Verbindungsstückenden (220a) und zweite Schwenkzapfenöffnungen (230b) benachbart zu den zweiten Verbindungsstückenden (220b) definieren, wobei das erste Verbindungsstückende des ersten Verbindungsstücks (200a) mit dem ersten bogenförmigen Kupplungselement (102a) durch einen ersten Schwenkzapfen (240a) verbunden ist, der sich entlang der ersten Schwenkachse (B) und durch die ersten Schwenkzapfenöffnungen des ersten Verbindungsstücks erstreckt, wobei das zweite Verbindungsstückende des ersten Verbindungsstücks mit dem zweiten bogenförmigen Kupplungselement (102b) durch einen zweiten Schwenkzapfen (240b) verbunden ist, der sich entlang der zweiten Schwenkachse (C) und durch die zweiten Schwenkzapfenöffnungen des ersten Verbindungsstücks erstreckt, wobei das erste Verbindungsstückende des zweiten Verbindungsstücks mit dem ersten bogenförmigen Kupplungselement durch einen dritten Schwenkzapfen (240c) verbunden ist, der sich entlang der ersten Schwenkachse und durch die ersten Schwenkzapfenöffnungen des zweiten Verbindungsstücks erstreckt, wobei das zweite Verbindungsstückende des zweiten Verbindungsstücks mit dem zweiten bogenförmigen Kupplungselement durch einen vierten Schwenkzapfen (240d) verbunden ist, der sich entlang der zweiten Schwenkachse und durch die zweiten Schwenkzapfenöffnungen des zweiten Verbindungsstücks erstreckt, und wobei das Verbindungsende der elastischen Auslegerelemente (250) einheitlich mit der jeweiligen Verbindungsstückwand (210b, 210a) gebildet ist.

3. Kupplungsanordnung nach einem der Ansprüche 1-2, wobei der Kupplungskörper (102) ein erstes und ein zweites axiales Ende (310a, 310b) einschließt, wobei an dem ersten und dem zweiten axialen Ende radiale Flansche (320a, 320b) bereitgestellt sind und wobei Verbindungsdrähte (330a, 330b) in Umfangsrichtung innerhalb des Kupplungskörpers in Nuten verlegt sind, die durch die radialen Flansche definiert sind, wobei die Verbindungsdrähte einen ersten Verbindungsdraht (330a) einschließlich erster Umfangsabschnitte (332a) einschließen, die in Umfangsrichtung entlang des ersten bogenförmigen Kupplungselements (102a) an dem ersten und zweiten axialen Ende des Kupplungskörpers geführt sind, und einen zweiten Verbindungsdraht (330b) einschließlich zweiter Umfangsabschnitte (332b), die in Umfangsrichtung entlang des zweiten bogenförmigen Kupplungselements (102b) an dem ersten und zweiten axialen Ende des Kupplungskörpers geführt sind, wobei der erste Verbindungsdraht einen ersten axialen Abschnitt (334a) einschließt, der axial entlang des ersten bogenförmigen Kupplungselements zwischen den ersten Umfangsabschnitten des ersten Verbindungsdrahts geführt wird, und wobei der zweite Verbindungsdraht einen zweiten axialen Abschnitt (334b) einschließt, der axial entlang des zweiten bogenförmigen Kupplungselements zwischen den zweiten Umfangsabschnitten des zweiten Verbindungsdrahts geführt wird.

4. Kupplungsanordnung nach einem der Ansprüche 1-3, wobei mindestens eines des ersten und zweiten Verbindungsstücks (200a, 200b) für eine mechanische Verbindung und eine elektrische Verbindung konfiguriert ist; und wobei mindestens einer des ersten und zweiten Verbindungsfingers (202a, 202b) für die elektrische Verbindung konfiguriert ist.

5. Kupplungssystem, umfassend die Kupplungsanordnung nach einem der Ansprüche 1-4, und
eine Hülse (112), die in den Kupplungskörper (102) passt, wobei der erste und zweite Verbindungsfinger (202a, 202b) so ausgelegt sind, dass sie mit der Hülse in Kontakt treten.

6. Kupplungssystem nach Anspruch 5, wobei die Verbindungsstückwände (210a, 210b) erste Schwenkzapfenöffnungen (230a) benachbart zu den ersten Verbindungsstückenden (220a) und zweite Schwenkzapfenöffnungen (230b) benachbart zu den zweiten Verbindungsstückenden (220b) definieren, wobei das erste Verbindungsstückende des ersten Verbindungsstücks (200a) mit dem ersten bogenförmigen Kupplungselement (102a) durch einen ersten Schwenkzapfen (240a) verbunden ist, der sich entlang der ersten Schwenkachse (B) und durch die ersten Schwenkzapfenöffnungen des ersten Verbindungsstücks erstreckt, wobei das zweite Verbindungsstückende des ersten Verbindungsstücks mit dem zweiten bogenförmigen Kupplungselement (102b) durch einen zweiten Schwenkzapfen (240b) verbunden ist, der sich entlang der zweiten Schwenkachse (C) und durch die zweiten Schwenkzapfenöffnungen des ersten Verbindungsstücks erstreckt, wobei das erste Verbindungsstückende des zweiten Verbindungsstücks mit dem ersten bogenförmigen Kupplungselement durch einen dritten Schwenkzapfen (240c) verbunden ist, der sich entlang der ersten Schwenkachse und durch die ersten Schwenkzapfenöffnungen des zweiten Verbindungsstücks erstreckt, wobei das zweite Verbindungsstückende des zweiten Verbindungsstücks mit dem zweiten bogenförmigen Kupplungselement durch einen vierten Schwenkzapfen (240d) verbunden ist, der sich entlang der zweiten Schwenkachse und durch die zweiten Schwenkzapfenöffnungen des zweiten Verbindungsstücks erstreckt, und wobei das Verbindungsende der elastischen Auslegerelemente (250) einheitlich mit der jeweiligen Verbindungsstückwand (210b, 210a) gebildet ist.

7. Kupplungssystem nach einem der Ansprüche 5-6, wobei der Kupplungskörper (102) ein erstes und ein zweites axiales Ende (310a, 310b) einschließt, wobei an dem ersten und dem zweiten axialen Ende radiale Flansche (320a, 320b) bereitgestellt sind und wobei Verbindungsdrähte (330a, 330b) in Umfangsrichtung innerhalb des Kupplungskörpers in Nuten verlegt sind, die durch die radialen Flansche definiert sind, wobei die Verbindungsdrähte einen ersten Verbindungsdraht (330a) einschließlich erster Umfangsabschnitte (332a) einschließen, die in Umfangsrichtung entlang des ersten bogenförmigen Kupplungselements (102a) an dem ersten und zweiten axialen Ende des Kupplungskörpers geführt sind, und einen zweiten Verbindungsdraht (330b) einschließlich zweiter Umfangsabschnitte (332b), die in Umfangsrichtung entlang des zweiten bogenförmigen Kupplungselements (102b) an dem ersten und zweiten axialen Ende des Kupplungskörpers geführt sind, wobei der erste Verbindungsdraht einen ersten axialen Abschnitt (334a) einschließt, der axial entlang des ersten bogenförmigen Kupplungselements zwischen den ersten Umfangsabschnitten des ersten Verbindungsdrahts geführt wird, und wobei der zweite Verbindungsdraht einen zweiten axialen Abschnitt (334b) einschließt, der axial entlang des zweiten bogenförmigen Kupplungselements zwischen den zweiten Umfangsabschnitten des zweiten Verbindungsdrahts geführt wird.

8. Kupplungssystem nach einem der Ansprüche 5-7, wobei mindestens eines des ersten und zweiten Verbindungsstücks (102a, 102b) für eine mechanische Verbindung und eine elektrische Verbindung konfiguriert ist; und wobei mindestens einer des ersten und zweiten Verbindungsfingers (202a, 202b) für die elektrische Verbindung konfiguriert ist.

9. Kupplungssystem nach einem der Ansprüche 5-8, wobei mindestens eines des ersten und zweiten Verbindungsstücks (102a, 102b) als Teil eines Scharniers einer scharnierartigen Klemme eingebaut ist und wobei die scharnierartige Klemme Teil des Kupplungssystems ist und Enden mit Zwingen 112a, 112b) aufweist, die in die Klemme passen.

## Revendications

1. Ensemble de raccordement comprenant :
un corps de raccordement (102) formé par des premier et second éléments de raccordement arqués (102a, 102b) ayant chacun une première extrémité (102c, 102d) et une seconde extrémité (102e, 102f) ;
un agencement de charnière (104) permettant de relier en pivotement les secondes extrémités des premier et second éléments de raccordement arqués, de sorte que les premier et second éléments de raccordement arqués puissent pivoter entre une position ouverte et une position fermée, en position fermée, les premier et second éléments de raccordement arqués entourent un axe central (A) du corps de raccordement et les premier et second éléments de raccordement forment un espace circonférentiel (124c) entre les secondes extrémités, l'agencement de charnière comprenant des première et seconde liaisons (200a, 200b) qui sont parallèles et qui sont espacées l'une de l'autre dans une orientation selon l'axe central, les première et seconde liaisons (200a, 200b) étant conçues pour s'étendre circonférentiellement à travers l'espace circonférentiel, les première et seconde liaisons étant connectées en pivotement au premier élément de raccordement arqué par un premier axe de pivot (B) et étant connectées en pivotement au second élément de raccordement arqué par un second axe de pivot (C), la première liaison comprenant une première languette de collage (202a) conçue pour faire saillie dans l'espace circonférentiel et la seconde liaison comprenant une seconde languette de collage (202b) conçue pour faire saillie dans l'espace circonférentiel ; et
un dispositif de verrouillage (106) pour verrouiller les premières extrémités des premier et second éléments de raccordement arqués ensemble afin de verrouiller les premier et second éléments de raccordement arqués en position fermée,
dans lequel chacune des première et seconde liaisons comprend des première et seconde parois de liaison parallèles (210a, 210b) qui s'étendent entre les première et seconde extrémités de liaison (220a, 220b) et sont accouplées via une portion de pont (260) ;
**caractérisé en ce que**
la languette de collage de chacune des première et seconde liaisons est formée par un élément élastique en porte-à-faux (250) ayant une extrémité de connexion connectée à la paroi, parmi les première et seconde parois de liaison, qui est plus éloignée de l'autre liaison et une extrémité libre (254) en forme de crochet qui s'étend sur l'ensemble de l'autre paroi parmi les première et seconde parois de liaison en direction de l'autre liaison, ladite autre paroi parmi les première et seconde parois de liaison comprenant une concavité (280) située en regard de la portion de pont pour éviter tout contact potentiel entre ladite paroi de liaison et la languette de collage ; et dans lequel l'angle entre l'élément élastique en porte-à-faux et la paroi de liaison à laquelle il est connecté est compris entre 120° et 160°.

2. Ensemble de raccordement selon la revendication 1, dans lequel les parois de liaison (210a, 210b) forment des premières ouvertures d'axe de pivot (230a) adjacentes aux premières extrémités de liaison (220a) et des secondes ouvertures d'axe de pivot (230b) adjacentes aux secondes extrémités de liaison (220b), dans lequel la première extrémité de liaison de la première liaison (200a) est connectée au premier élément de raccordement arqué (102a) par un premier axe de pivot (240a) qui s'étend le long du premier axe de pivot (B) et traverse les premières ouvertures d'axe de pivot de la première liaison, dans lequel la seconde extrémité de liaison de la première liaison est connectée au second élément de raccordement arqué (102b) par un deuxième axe de pivot (240b) qui s'étend du long du deuxième axe de pivot (C) et traverse les secondes ouvertures d'axe de pivot de la première liaison, dans lequel la première extrémité de liaison de la seconde liaison est connectée au premier élément de raccordement arqué par un troisième axe de pivot (240c) qui s'étend le long du premier axe de pivot et traverse les premières ouvertures d'axe de pivot de la seconde liaison, dans lequel la seconde extrémité de liaison de la seconde liaison est connectée au second élément de raccordement arqué par un quatrième axe de pivot (240d) qui s'étend le long du deuxième axe de pivot et traverse les secondes ouvertures d'axe de pivot de la seconde liaison et dans lequel l'extrémité de connexion des éléments élastiques en porte-à-faux (250) est formée d'un seul tenant avec la paroi de liaison (210b, 210a) respective.

3. Ensemble de raccordement selon l'une quelconque des revendications 1 à 2, dans lequel le corps de raccordement (102) comprend des première et seconde extrémités axiales (310a, 310b), dans lequel des rebords radiaux (320a, 320b) sont disposés aux première et secondes extrémités axiales, et dans lequel des fils de collage (330a, 330b) sont acheminés circonférentiellement à l'intérieur du corps de raccordement, dans des rainures formées par les rebords radiaux, dans lequel les fils de collage comprennent un premier fil de collage (330a) comportant des premières portions circonférentielles (332a) acheminées circonférentiellement le long du premier élément de raccordement arqué (102a) au niveau des première et seconde extrémités axiales du corps de raccordement, et un second fil de collage (330b) comportant des secondes portions circonférentielles (332b) acheminées circonférentiellement le long du second élément de raccordement arqué (102b) au niveau des première et seconde extrémités axiales du corps de raccordement, dans lequel le premier fil de collage comprend une première portion axiale (334a) acheminée axialement le long du premier élément de raccordement arqué entre les premières portions circonférentielles du premier fil de collage, et dans lequel le second fil de collage comprend une seconde portion axiale (334b) acheminée axialement le long du second élément de raccordement arqué entre les secondes portions circonférentielles du second fil de collage.

4. Ensemble de raccordement selon l'une quelconque des revendications 1 à 3, dans lequel au moins l'une des première et seconde liaisons (200a, 200b) est conçue pour une connexion mécanique et une liaison électrique; et dans lequel au moins l'une des première et seconde languettes de collage (202a, 202b) est conçue pour la liaison électrique.

5. Système de raccordement comprenant l'ensemble de raccordement selon l'une quelconque des revendications 1 à 4, et
un manchon (112) qui s'insère dans le corps de raccordement (102), dans lequel les première et seconde languettes de collage (202a, 202b) sont adaptées pour entrer en contact avec le manchon.

6. Système de raccordement selon la revendication 5, dans lequel les parois de liaison (210a, 210b) forment des premières ouvertures d'axe de pivot (230a) adjacentes aux premières extrémités de liaison (220a) et des secondes ouvertures d'axe de pivot (230b) adjacentes aux secondes extrémités de liaison (220b), dans lequel la première extrémité de liaison de la première liaison (200a) est connectée au premier élément de raccordement arqué (102a) par un premier axe de pivot (240a) qui s'étend le long du premier axe de pivot (B) et traverse les premières ouvertures d'axe de pivot de la première liaison, dans lequel la seconde extrémité de liaison de la première liaison est connectée au second élément de raccordement arqué (102b) par un deuxième axe de pivot (240b) qui s'étend du long du deuxième axe de pivot (C) et traverse les secondes ouvertures d'axe de pivot de la première liaison, dans lequel la première extrémité de liaison de la seconde liaison est connectée au premier élément de raccordement arqué par un troisième axe de pivot (240c) qui s'étend le long du premier axe de pivot et traverse les premières ouvertures d'axe de pivot de la seconde liaison, dans lequel la seconde extrémité de liaison de la seconde liaison est connectée au second élément de raccordement arqué par un quatrième axe de pivot (240d) qui s'étend le long du deuxième axe de pivot et traverse les secondes ouvertures d'axe de pivot de la seconde liaison et dans lequel l'extrémité de connexion des éléments élastiques en porte-à-faux (250) est formée d'un seul tenant avec la paroi de liaison (210a, 210b) respective.

7. Système de raccordement selon l'une quelconque des revendications 5 à 6, dans lequel le corps de raccordement (102) comprend des première et seconde extrémités axiales (310a, 310b), dans lequel des rebords radiaux (320a, 320b) sont disposés aux première et seconde extrémités axiales, et dans lequel des fils de liaison (330a, 330b) sont acheminés circonférentiellement à l'intérieur du corps de raccordement, dans des rainures formées par les rebords radiaux, dans lequel les fils de liaison comprennent un premier fil de collage (330a) comportant des premières portions circonférentielles (332a) acheminées circonférentiellement le long du premier élément de raccordement arqué (102a) aux première et seconde extrémités axiales du corps de raccordement, et un second fil de collage (330b) comportant des secondes portions circonférentielles (332b) acheminées circonférentiellement le long du second élément de raccordement arqué (102b) aux première et seconde extrémités axiales du corps de raccordement, dans lequel le premier fil de collage comprend une première portion axiale (334a) acheminée axialement le long du premier élément de raccordement arqué entre les premières portions circonférentielles du premier fil de collage, et dans lequel le second fil de collage comprend une seconde portion axiale (334b) acheminée axialement le long du second élément de raccordement arqué entre les secondes portions circonférentielles du second fil de collage.

8. Système de raccordement selon l'une quelconque des revendications 5 à 7, dans lequel au moins l'une des première et seconde liaisons (102a, 102b) est conçue pour une connexion mécanique et un collage électrique ; et dans lequel au moins l'une des première et seconde languettes de collage (202a, 202b) est conçue pour le collage électrique.

9. Système de raccordement selon l'une quelconque des revendications 5 à 8, dans lequel au moins l'une des première et seconde liaisons (102a, 102b) est incorporée dans le cadre d'une charnière d'une pince de style coquille, et dans lequel la pince de style coquille fait partie du système de raccordement ayant des extrémités avec des viroles (112a, 112b) qui s'insèrent dans la pince.
